# EUROPEAN PATENT APPLICATION

(11) **EP 1 488 707 A1**
(43) Date of publication of application: **22.12.2004**
(21) Application number: 03013880.4
(22) Date of filing: 19.06.2003
(51) Int. Cl.: A23L 1/212, A23L 1/221, A23L 1/223, A23L 1/30, A23P 1/04, A23L 1/00

(54) **Dehydrated mix compostion with coconut**

(71) Applicant: Nestec S.A., 1800 Vevey (CH)
(72) Inventor: Lim, Eu-Chin, Singapore 610351 (SG); Fu, Julia, S160034 Singapore (SG); Lim, Allan, SG-Singapore 556114 (SG)

(57) **Abstract**

The present invention relates to a complete dehydrated mix containing spices and coconut fatty material or alike along with all necessary binders suitable for quick and easy preparation of complete meals such as curries for example. The spices comprised in the dehydrated mix according to the present invention exhibit a lipase activity that has been substantially decreased thanks to appropriate enzyme inactivation treatment. Therefore, the complete dehydrated mix may be stored for several months at ambient temperature without any development of soapiness off-flavour.

## Description

The present invention concerns complete dehydrated kit for the convenient preparation of meals wherein the fat is contained into and preserved from enzymatic hydrolysis avoiding the development of soapy off-flavour during storage. The present product is especially directed to curry-type meal kit comprising spices as well as coconut material admixed to.

The concept of speed-scratch cooking is growing increasingly popular with consumers. These kinds of products generally just necessitate the addition of meat, seafood or vegetables and are presented as ready for use dry mixes or pastes. The basic concept of speed-scratch cooking relies on the principle of simplifying one's life.

Therefore, meal kits are particularly appealing to shoppers who buy on impulse in which they can find everything needed for them. Moreover, the simplicity of preparation is important because many consumers grew up on convenience-type food and lack the skills needed to prepare meals.

Ethnic cuisine that is broadly accepted worldwide represents a good basis for speed-scratch cooking. Indeed, meat-in-sauce dishes like curry, tikka masala and other Asian or Indian type meals and soups are good candidates for an easy and quick preparation based on kits. Traditionally such meals involve many different ingredients and spices as well as precise order of addition of such ingredients. Providing a complete mix or kit to which the consumer only need to add meat and/or fresh vegetables is very well appreciated. The existing products are available whether in pasty or dry mix form. The pasty form is generally a kind of concentrated and viscous product presented in a sterilized jar or pouch. The dry mix form may be a complete dry mixture of spices and binders that only requires addition of water or water-based and fat diluant such as milk and butter or cream for example, after stir-frying of meat. For some ethnic products, coconut is an ingredient of great importance. Coconut milk and coconut cream are widely used as a flavor and mouthfeel base in many Oriental culinary preparations (e.g., Thai and Indian dishes like curries) in a comparable way as butter and cream are used in European ones.

Coconut milk or cream is not always compatible with meal kits or mixes, and coconut milk or cream therefore needs to be presented in the form of a powder for a more convenient storage and use. However, coconut-derived-products, due to the high content of lauric acid (C12) and short-chain fatty acids (C6-C10), will result in significant soapy off-flavour when exposed to lipase-containing ingredients.

Further, in other types of product, even if no coconut is required, a fat base is necessary to provide mouthfeel to the meal. Since, it is convenient to have all-in-one kit, it is desirable to have the fat in the mix. Fat incorporation may be achieved by coating the binder with fat, for example.

Ready for use mixes contain flavours and spices and especially in the case of exotic meal mixes, spices are of great importance for enhancing the taste of the reconstituted meal especially because the preparation of the meal does not involve long cooking/simmering step.

However, one issue with complete ready-for-use mixes containing fat is the problem of the prevention of soapy off-flavour development. Indeed, in the case of such dehydrated mixtures rich in spices and containing fat, especially coconut or palm kernel fats, one can notice the rapid development of a soapy off-flavour during storage. It is for these reasons that in the case of dehydrated mixes containing high levels of spices, fat-containing material - for example coconut or palm kernel fats - is provided separately from the spices mix. This allows a good stability during storage without development of soapy off-flavour. However, this limits the convenience of the kit because it necessitates a further manipulation of at least two separate packages; one for the spices mix and one for the fat-based component, especially coconut fat-derived component. Moreover, this is an additional charge for manufacturing and packaging and increases the production cost of such products.

In the case of curry mixes that are rich in very different spices, one solution consists in separating the curry spices mix from the coconut material whether in powder or in paste. Therefore, the consumer has to deal with several sachets or bags containing the different ingredients separated each from each in order to prevent this off-flavour development.

The level of lipase activity in spices is very high and therefore spices are believed to be responsible for the hydrolysis of coconut fat leading to the development of the off-flavour.

Existing solutions in order to prevent lipase activity responsible for the soapy off-flavour include replacing the spices with spice extracts and flavours. Alternatively, one can limit the use of short-chain fatty acids that are sensitive to lipase action. However such limitation is not ideal in the case of dehydrated mixes suited for the reconstitution of Asian meals like curries that necessitate coconut material that is rich in C8-C12 fatty acids.

Therefore there remains a need for a complete and ready-to-use dehydrated mix suited for the easy preparation of the meal base that provides all the necessary ingredients, including fat and fat-based material, without exhibiting soapy off-flavour during storage.

Accordingly, it is an object of the present invention to provide a dehydrated mix for easy preparation of meal that comprises a source of spices and a source of fatty material rich in C6-C12 fatty acids characterized in that substantially no lipase activity from the source of spices can be detected.

The dehydrated mix according to the present invention therefore comprises a source of spices whose lipase activity has been inactivated in order to inhibit totally or partially to at least retard or limit the lipase-induced fatty material hydrolysis.

It is also an object of the present invention to provide a method for the manufacture of dehydrated mix by mixing a source of spices and a source of fat rich in C6-C12 fatty acids, the method being such that the lipase activity from the source of spice is substantially not detectable.

The inactivation of lipase activity of the source of spices may be achieved by heat treatment of a spice blend. Suitable heat treatment may consist in subjecting a spice mix to a temperature and during a time sufficient to reduce the lipase activity of the spice mix to a value of less than 3.0 Lipase Unit per gram of spice and more preferably not detectable. For example a heat treatment of about 90°C to about 200°C during a time of about 1 to about 45 minutes may be suitable for achieving the desired result.

In the context of the present invention, the expression "substantially not detectable" means that the Lipase activity in the mix according to the present invention is less than 3.0 Lipase Unit per gram of mix, preferable less than 2.0 Lipase Unit per gram of mix.

Therefore, the source of spices may be subjected to a heat treatment by any suitable means for heating food material. Such heating treatment may consist in heating the spice blend in a conventional oven or an impingement oven. Heating in a microwave oven may also be possible. It has been found that a frying treatment of spice mix achieves significant lipase inactivation. Therefore, it is still possible to fry a spice blend into oil or fat at a temperature and during a time sufficient to obtain partial or total inactivation of lipase activity.

The frying may be done with any food-grade fat material such as palm oil, rapeseed oil and soybean oil for example. The quantity of oil used is not critical and the ratio of oil:spice may range for 1:2 to 2:1, for example. Advantageously and surprisingly it has been noticed that addition of a quantity of water of about up to about 30% to the spice mix before the heating or frying leads to a more effective inactivation of the lipase activity contained in the spice blend.

The lipase activity may be evaluated according to the following method :
0.8g of spice sample is mixed with 3.2g of coconut milk powder in a 20ml headspace vial followed by 100 µl of water. Standards are prepared likewise by adding 1.7-170 U of lipase (Sigma L9406). Both samples and standards are incubated at 37°C for 3 days. C8 (Caprylic acid) in headspace is then quantified by gas chromatography and expressed as Lipase Units (U) per gram of sample.

Lipase activity in the mix containing coconut according to the present invention is determined by subjecting 4.0g of the product and 100µl of water to gas chromatography according to the above mentioned method without the 3-day incubation, and expressed as Lipase Units (U) per gram of product mix.

The source of spices comprised in the complete dehydrated mix according to the present invention may be selected from a broad range of spices known in culinary application such as coriander, cumin, fenugreek, garlic, nutmeg, cardamon, white pepper, black pepper and tumeric, alone or in combination for example. Surprisingly, it has been noticed that pepper (black or white) exhibits a high level of lipase activity and may be responsible of the main lipase activity in a spice blend. Therefore, the method according to the present invention maybe such that the source of spice which lipase activity is to be substantially inactivated is selected in the group comprising black and/or white pepper.

Beside the spices, the dehydrated mix according to the present invention may comprise any suitable binders selected in the group comprising carbohydrates and polysaccharides such as starch, maltodextrin, for example.

The dehydrated mix according to the present invention may also comprise flavours, taste enhancers, dehydrated pieces of vegetables , meat or crustacean, for example or any other dry ingredient traditionally used in dehydrated mixes.

The product according to the present invention may be manufactured according to classical mixing technology well-known in the art, provided that the spice blend to be used has been treated in a way to sufficiently inactivate, at least partially the lipase activity contained therein, so that it is not substantially detectable by the method described in the present invention.

Therefore, once the spice blend has been heat-treated in a way to reduce the lipase activity to a level substantially non-detectable by the above method, it may be added to a binding base comprising polysaccharides such as starch and finally admixed with coconut-based material in powdery/dry form.

The source of fatty material comprised in the product according to the present invention may be any food-grade fat material commonly used in food manufacture. In the frame of the present problem solved by the invention, a fatty material that is rich in C6-C12 fatty acids is of much concern. Such kind of fatty material is generally found in coconut fat or palm kernel fat for example.

Therefore, the source of spices comprised in the product according to the invention whose lipase activity has been eliminated or reduced according to the invention can be admixed with the source of fatty material that can be selected from coconut material, palm and soya material.

As mentioned above, since the heat inactivation of lipase activity may be achieved by frying the source of spices in fat or oil, it is advantageous to use the frying fat as source of fatty material comprised in the dehydrated mix according to the present invention.

The content of the source of spices in the dehydrated mix according to the present invention may range from 10% to 80%. The content of the source of fatty material in the dehydrated mix according to the present invention may range from 1% to 10%.

In the case of frying the source of spices in fatty material for lipase inactivation and depending on the ratio of fat:spice used for such inactivation by frying, the source of spices may be drained in order to adjust the quantity of fatty material to the quantity of spice to the desired ratio to be present in the final product. In such case, the mixture fat and spice may then be admixed with a binding phase as mentioned above ; binding phase that may be selected from the group comprising flour, native or modified starch, native or modified maltodextrin and the like.

In the specific case of manufacture of a dehydrated mix for the easy preparation of curry, soup or similar kind of Oriental or Asian meal a suitable coconut material to be used in the product according to the present invention may be any coconut material that is dehydrated, i.e. contains less than 5% moisture and that contains fat. Such coconut material may be coconut cream or coconut milk in powdery form that can be obtained by classical drying process known in the art. A suitable process is described in US 2079030 that enables the manufacture of a light, fluffy coconut powder. Such a product is manufactured by adding an amount of water equal to 1-2 times the weight of the coconut to form a mixture which is grounded, passed through a 60 mesh (250 microns) screen and dried to a light and fluffy mass.

Then, according to the present invention, it provides a complete dry mix that is suitable for the easy reconstitution of a meal or soup by simple addition of meat, fish or vegetables as well as suitable amount of water or bouillon and does not need any supplementary ingredient. Indeed, all the necessary ingredients, including fat, especially fat from coconut for example, are comprised in the present dehydrated composition.

It has thus been observed that the product according to the present invention may be stored for up to at least 9 months without development of any soapy off-flavour, thanks to the inactivation of lipase activity in the source of spices that is suspected of being responsible of such off-flavour development in the absence of inactivation treatment.

The present invention provides the consumer a single package containing all the necessary ingredients for a simple and quick preparation of a coconut-containing dish (curry for example). The consumer does not need to buy the separate components, namely a spice mix on the one hand and coconut milk powder on the other hand. Moreover, this product allows significant cost savings on the point of view of packaging material as well as production operations.

The product according to the present invention as well as its advantages and benefits may be seen from the following examples.

### Example 1 : Treatment of Peppers

The following procedure is used for heat treatment of a 1 kg batch of white pepper powder and black pepper powder:
- Weigh 1 kg white/black pepper into a bowl mixer
- Weigh 100 - 300 g water (i.e. 10 - 30% of white/black pepper powder weight)
- Pour water into the white/pepper pepper powder, mix thoroughly at low speed for 5 minutes.
- Separately weigh & transfer 1 kg palm fat into a gas-fired wok (equipped with mechanical rotating mixer)
- Heat and melt the palm fat to 120°C
- Carefully pour the wetted white/black pepper powder into the heated palm fat
- Monitor temperature increase of the mixture
- When the mixture temperature reaches around 115°C, reduce flame
- Hold the mixture temperature at 120°C for 10 minutes
- Empty the heat-treated mixture of white/black pepper powder and palm fat into an open container to allow cooling.

An oily mixture is obtained after the mixture cools down to room temperature. The mixture exhibits a lipase activity of less than 1 U/g of spice as measure according to the method herein described. This mixture is easily dispersed into other dehydrated spice and powder raw materials in the product formulation.

The spice blend may be admixed with coconut cream powder in order to make a ready to use dehydrated mix that may be stored for 12 months without any off-flavour development.

### Example 2 : Creamy Beef Curry with coconut

| | |
|---|---|
| Salt | 2% |
| Sugar | 1% |
| **Treated white pepper** | 0.25% |
| Skimmed milk powder | 7% |
| Soya sauce powder | 1% |
| Wheat flour | 3% |
| **Spices:** Chilli, tumeric, coriander, galangal, ginger, cumin, aniseed, fenugreek, | 7% |
| **Coconut milk powder** | 75% |
| Corn starch | 1.5% |
| **Garnishes:** Toasted Onion Minced Garlic | 2.5% |

The complete dry mix may be stored during several months without any off-flavour development and may be used directly as explicated below. Indeed, such ready for use mix allow avoiding dealing with separated ingredients. Coconut material is already included in such a mix and there is no need to provide any other separated source of coconut such as milk or powder.

### Example of application

Creamy Beef Curry - Blend "Creamy Beef Curry with Coconut" mix with 1 litre water in a wok. Bring to boil while stirring. Add beef cubes (500g, 1 cm size cubes), oil (2 tablespoons) and lemongrass (2 stalks crushed). Reduce heat when boiled. Simmer for 45 minutes with occasional stirring. Gravy should be thick and beef should be tender. Add turmeric leaf (1 leaf, finely sliced), kaffirlime leaf (1 leaf, finely sliced) and toasted desiccated coconut (2 tablespoons) just before turning off the fire. Creamy Beef Curry dish is ready to serve with steamed rice.

### Example 3 : Chicken Kurma with coconut.

| Dry ingredients (% in weight) : | |
|---|---|
| Salt | 7 |
| Monosodium Glutamate | 6 |
| Yeast Peptone Powder | 2 |
| Spices: | 37 |
| | |
| Coconut Milk Powder | 40 |
| Heat Treated Black & White pepper Powder | 4.5 |
| Maltodextrin | 4 |

### application

Pre-fry onions (200g) with oil (40g). Separately, pre-blend "Chicken Kurma with Coconut" mix (67g) with water (150 ml). Add blend to the pre-fried onion. Add in additional 500 ml water, pre-cut chicken (500g) and potato (200g). Bring to boil, simmer for 20 minutes. Chicken Kurma dish is ready to serve with steamed rice.

## Claims

1. Dehydrated mix for easy preparation of meal that comprises a source of spice and a source of fatty material rich in C6-C12 fatty acids **characterized in that** substantially no lipase activity from the source of spices can be detected.

2. Dehydrated mix according to claim 1, **characterized in that** the lipase activity of the source of spice is less than 2.0 Lipase Unit per gram of mix.

3. Dehydrated mix according to claim 1, **characterized in that** the source of spice is selected in the group comprising black and/or white pepper.

4. Method for the manufacture of dehydrated mix comprising the step of mixing a source of spices and a source of fat rich in C6-C12 fatty acids, the method being such that the lipase activity from the source of spices is substantially not detectable.

5. Method according to claim 4, **characterized in that** the lipase activity of the source of spices is less than 2.0 Lipase Unit per gram of source of mix.

6. Method according to claim 4, **characterized in that** the lipase activity of the source of spices is reduced by a heat treatment prior to mixing.

7. Method according to claim 6, **characterized in that** the heat treatment is 90°C to 200°C during a time of 1 to 45 minutes.

8. Method according to claim 6, **characterized in that** the heat treatment is achieved by frying.

9. Method according to claim 8, **characterized in that** the frying is achieved by frying in the source of fat rich in C6-C12 fatty acids.

10. Method according to claim 6, **characterized in that** a quantity of water of about up to about 30% is added to the source of spices before the heating treatment.

11. Method according to claims 4 to 10, **characterized in that** the source of spices is selected in the group comprising black and white pepper.
